# EUROPÄISCHE PATENTSCHRIFT

(11) **EP 0 912 392 B1**
(45) Veröffentlichungstag und Bekanntmachung des Hinweises auf die Patenterteilung: **18.04.2001**
(21) Anmeldenummer: 97932635.2
(22) Anmeldetag: 22.07.1997
(51) Int. Cl.: B62M 1/10, B62M 3/00

(54) **TRETKURBELANTRIEB FÜR EIN FAHRRAD**
PEDAL CRANK DRIVE FOR A BICYCLE
ENTRAINEMENT DE MANIVELLE DE PEDALIER POUR UNE BICYCLETTE

(30) Priorität: 23.07.1996 AT 132196
(43) Veröffentlichungstag der Anmeldung: 06.05.1999
(73) Patentinhaber: Hilber, Gerhard, 6380 St. Johann in Tirol (AT)
(72) Erfinder: Hilber, Gerhard, 6380 St. Johann in Tirol (AT)
(74) Vertreter: Hübscher, Gerhard, Dipl.-Ing.
(86) Internationale Anmeldenummer: AT9700169
(87) Internationale Veröffentlichungsnummer: WO9803391

(56) Entgegenhaltungen:
- EP-A- 0 392 063
- WO-A-92/04230
- WO-A-93/08071
- FR-A- 2 024 264

## Beschreibung

Die Erfindung bezieht sich auf einen Tretkurbelantrieb für ein Fahrrad mit einer ein Lagergehäuse durchsetzenden Welle, einem wenigstens einen Zahnkranz aufweisenden Kettenrad, dessen Nabe gegenüber der Welle drehbar gehalten ist, und mit einer einerseits an der Welle und anderseits an der Nabe des Kettenrades abgestützten, innerhalb des Lagergehäuses angeordneten Kraftübertragungsfeder. Ein derartiger Tretkurbelantrieb ist an sich bekannt.

EP 0 546 004 B1 zeigt einen Tretkurbelantrieb für ein Fahrrad mit einer ein Lagergehäuse durchsetzenden welle, einem wenigstens einen Zahnkranz aufweisenden Kettenrad, dessen Nabe gegenüber der welle drehbar gelagert ist, und mit einer einerseits an der welle, andererseits am Kettenrad abgestützten Kraftübertragungsfeder. Um eine vorteilhafte Drehmomentverteilung über eine Kettenradumdrehung zu erhalten, ist es aus EP 0 546 004 B1 bekannt, zwischen dem gegenüber der Tretkurbelwelle drehbar gelagerten Kettenrad und der dem Kettenrad benachbarten Tretkurbel eine bei einer Vorwärtsdrehung der Tretkurbeln belastbare Kraftübertragungsfeder vorzusehen, in der ein Teil der beim Abwärtstreten der Tretkurbeln aufgebrachten Kräfte gespeichert werden kann. Diese gespeicherten Kräfte können im Totpunktbereich des Tretkurbelantriebes vorteilhaft an das Kettenrad abgegeben werden, was eine bessere Drehmomentverteilung über eine Kurbelumdrehung mit sich bringt. Wird die als Schraubenfeder ausgebildete Kraftübertragungsfeder ausreichend dimensioniert, um auch größere Kraftanteile innerhalb des zur Verfügung stehenden, begrenzten Federweges aufnehmen zu können, so besteht die Gefahr, daß über die Kraftübertragungsfeder die Tretkurbeln in den Totpunktbereichen des Tretkurbelantriebes entgegen dem durch den Radfahrer aufzubringenden Stützmoment zurückgedreht werden, wenn sich die Kraftübertragungsfeder, die über die beim Abwärtstreten vorauseilenden Tretkurbeln gespannt wird, im Totpunktbereich wieder entspannt. Aus diesem Grunde wird eine im Belastungssinn der Kraftübertragungsfeder vorgespannte Dämpfungsfeder eingesetzt, so daß sich die Kraftübertragungsfeder nur gegen die Kraft dieser Dämpfungsfeder entspannen kann. Da sich die Dämpfungskraft einer solchen Dämpfungsfeder mit zunehmender Entlastung der Kraftübertragungsfeder vergrößert, stellt sich eine gleichmäßigere Drehmomentverteilung über eine Tretkurbelumdrehung ein. Die Anordnung der Kraftübertragungsfeder zwischen der dem Kettenrad benachbarten Tretkurbel und dem gegenüber den Tretkurbeln drehbar gelagerten Kettenrad macht aber gerade im Hinblick auf die zu übertragenden großen Kräfte besondere konstruktive Maßnahmen erforderlich, die eine einfache Umrüstung üblicher Tretkurbelantriebe ohne Kraftübertragungsfeder ausschließen. Außerdem sind die beim Einsatz einer Kraftübertragungsfeder notwendigen konstruktiven Änderungen eines Tretkurbelantriebes mit einem entsprechenden Mehrgewicht verbunden.

Damit bei einem Fahrrad mit einem Hilfsmotor der Hilfsmotor in Abhängigkeit von einem vorgebbaren, jeweils über den Tretkurbelantrieb aufgebrachten Tretmoment selbständig zugeschaltet werden kann, ist es außerdem bekannt (US 5 024 286 A), zwischen der auf der Tretkurbelwelle drehbar gelagerten Nabe eines Kettenrades und der Tretkurbelwelle eine die Tretkurbelwelle umschließende Schraubenfeder vorzusehen, die beim Aufbringen eines entsprechenden Tretmomentes eine Verdrehung der Tretkurbelwelle gegenüber dem Kettenrad zuläßt, so daß aus dem Drehwinkel zwischen Tretkurbelwelle und Kettenrad eine entsprechende Steuerung des Hilfsmotors abgeleitet werden kann. Diese bekannte Konstruktion ist allerdings nur für die Steuerung eines Hilfsmotors, nicht aber für eine Verbesserung der Drehmomentverteilung über einen Tretkurbelumlauf geeignet.

Der Erfindung liegt somit die Aufgabe zugrunde, einen Tretkurbelantrieb mit einer Kraftübertragungsfeder in der Antrtiebsverbindung zwischen den Tretkurbeln und dem anzutreibenden Rad zur Verbesserung der Drehmomentverteilung über eine Tretkurbelumdrehung mit einfachen Mitteln so auszugestalten, daß nicht nur eine Umrüstung herkömmlicher Tretkurbelantriebe möglich wird, sondern auch eine kompakte, gewichtssparende Konstruktion sichergestellt werden kann.

Ausgehend von einem Tretkurbelantrieb der eingangs geschilderten Art löst die Erfindung die gestellte Aufgabe dadurch, daß die Kraftübertragungsfeder aus über den Umfang der Welle verteilten, jeweils an der Nabe des Kettenrades und an der Welle abgestützten Federelementen besteht.

Durch die Anordnung der Kraftübertragungsfeder im Lagergehäuse der Welle erübrigen sich zwar sonst notwendige konstruktive Änderungen des Tretkurbelantriebes, so daß lediglich für eine drehbare Lagerung des Kettenrades gegenüber der Welle gesorgt werden muß, doch bedingen die beschränkten Platzverhältnisse innerhalb des Lagergehäuses nicht nur ungünstige Kraftangriffe, sondern auch kleine Federwege, was aufgrund der damit verbundenen hohen Belastungen der Kraftübertragungsfeder den Einsatz einer Schraubenfeder ausschließt. Erst durch die Aufteilung der Kraftübertragungsfeder in mehrere über den Umfang verteilte Federelemente kann eine allen Anforderungen genügende Konstruktion erreicht werden, weil durch diese Maßnahme die anfallenden Belastungen auf die einzelnen, für sich entsprechend ausformbaren Federelemente aufgeteilt werden können. Dazu kommt, daß sich im Vergleich zu Schraubenfedern für diesen Einsatzfall eine günstigere Abhängigkeit der Federkraft vom Federweg einstellen läßt, so daß eine im Belastungssinn der Kraftübertragungsfeder vorgespannte Dämfpungsfeder entfallen kann.

Die Federelemente können unterschiedlich ausgebildet sein. Eine Möglichkeit besteht darin, daß die Federelemente der Kraftübertragungsfeder aus axialen (d.h. in Richtung der Welle verlaufenden) Federstäben bestehen, die mit geringem Raumbedarf im Ringraum zwischen der Welle und dem sie umschließenden Lagergehäuse in einer an die geforderte Federkraft angepaßten Anzahl angeordnet werden können. Um besonders einfache Konstruktionsbedingungen zu erhalten, können die die Federstäbe mit endseitigen Lagerringen zu einer Baueinheit verbunden sein. Ein geringer Konstruktionsaufwand wird in diesem Zusammenhang sichergestellt, wenn die Federstäbe mit den Lagerringen aus einer Hülse mit Längsschlitzen gebildet werden.

Torsionsmomente stellen eine zusätzliche, bei der Dimensionierung zu berücksichtigende Belastung der Federstäbe dar. Zur Vermeidung solcher zusätzlicher Belastungen können die Federstäbe vorteilhaft als einseitig eingespannte Biegestäbe ausgebildet werden, deren dem Einspannende gegenüberliegendes Ende gelenkig gehalten ist, so daß Torsionsmomente weitgehend ausgeschaltet werden können.

Eine andere Möglichkeit der Ausbildung der Kraftübertragungsfeder ergibt sich, wenn die Welle gegen die Nabe des Kettenrades vorragende, über den Umfang verteilte, zahnartige Ansätze aufweist, die in Lücken zwischen zahnartigen Ansätzen der Nabe eingreifen, wobei zwischen den zahnartig ineinandergreifenden Ansätzen der Welle und der Nabe die Federelemte angeordnet sind. Auch diese Anordnung erlaubt den Einsatz von einzelbelasteten Federelementen, die durch Tellerfedern, Blattfederbügel, elastomere Federkörper od. dgl. gebildet werden können.

Zur Begrenzung der Belastung der einzelnen Federelemente kann zusätzlich der gegenseitige Drehwinkel zwischen der Tretkurbel und der Nabe des Kettenrades durch Anschläge begrenzt werden. Die Belastung der Federelemente hängt ja von diesem Drehwinkel ab, so daß durch entsprechende Anschläge zur Begrenzung des maximal zulässigen Drehwinkels eine Überlastung der Federelemente ausgeschlossen werden kann.

Um eine vorteilhafte Baueinheit zu erhalten, kann die Nabe des Kettenrades im Lagergehäuse für die Welle drehbar gelagert sein, so daß zum Umrüsten lediglich ein herkömmliches Lagergehäuse gegen ein Lagergehäuse ausgewechselt werden muß, das die Kraftübertragungsfeder zwischen der Welle und der Nabe des im Lagergehäuse gelagerten Kettenrades aufweist.

Wie bereits ausgeführt wurde, kann aufgrund der besonderen Ausbildung der Kraftübertragungsfeder aus über den Umfang der Welle bzw. der Nabe verteilten Federelementen auf eine Dämpfungsfeder verzichtet werden. Wird trotzdem eine Dämpfungsfeder eingesetzt, so ergibt sich die vorteilhafte Möglichkeit, die Kraftverhältnisse an den Fahrradbenützer anpassen zu können. Die Dämpfungsfeder kann nachträglich zwischen der dem Kettenrad benachbarten Tretkurbel und dem Kettenrad eingesetzt werden, was wegen der beschränkten Federkraft der Dämpfungsfeder keine Schwierigkeiten mit sich bringt. Soll das nachträgliche Einsetzen der Dämpfungsfeder vermieden werden, so kann die Dämpfungsfeder vorteilhaft im Lagergehäuse der Welle untergebracht werden, wobei sich eine einfache Lösung insbesondere für den Fall anbietet, daß die Federelemente zwischen den ineinandergreifenden zahnartigen Ansätzen der Welle und der Nabe des Kettenrades angeordnet sind, weil dann auch die Dämpfungsfeder in einzelne Federelmente zwischen den zahnartigen Ansätzen aufgeteilt werden kann.

In der Zeichnung ist der Erfindungsgegenstand beispielsweise dargestellt. Es zeigen
- Fig. 1: einen erfindungsgemäßen Tretkurbelantrieb in einer vereinfachten Seitenansicht,
- Fig. 2: diesen Tretkurbelantrieb in einem Schnitt nach der Linie II-II der Fig. 1,
- Fig. 3: einen Schnitt nach der Linie III-III der Fig. 2
- Fig. 4: eine Konstruktionsvariante eines erfindungsgemäßen Tretkurbelantriebes in einem Axailaschnitt durch das Lagergehäuse für die Tretkurbelwelle in einem größeren Maßstab,
- Fig. 5: die Anordnung der Kraftübnertragungsfeder einer weitere Kunstruktionsvariante ausschnittsweise in einer Seitenansicht der auf der Welle drehbar gelagerten Nabe des Kettenrades und
- Fig. 6: einen Schnitt nach der Linie Vl-Vl der Fig. 5.

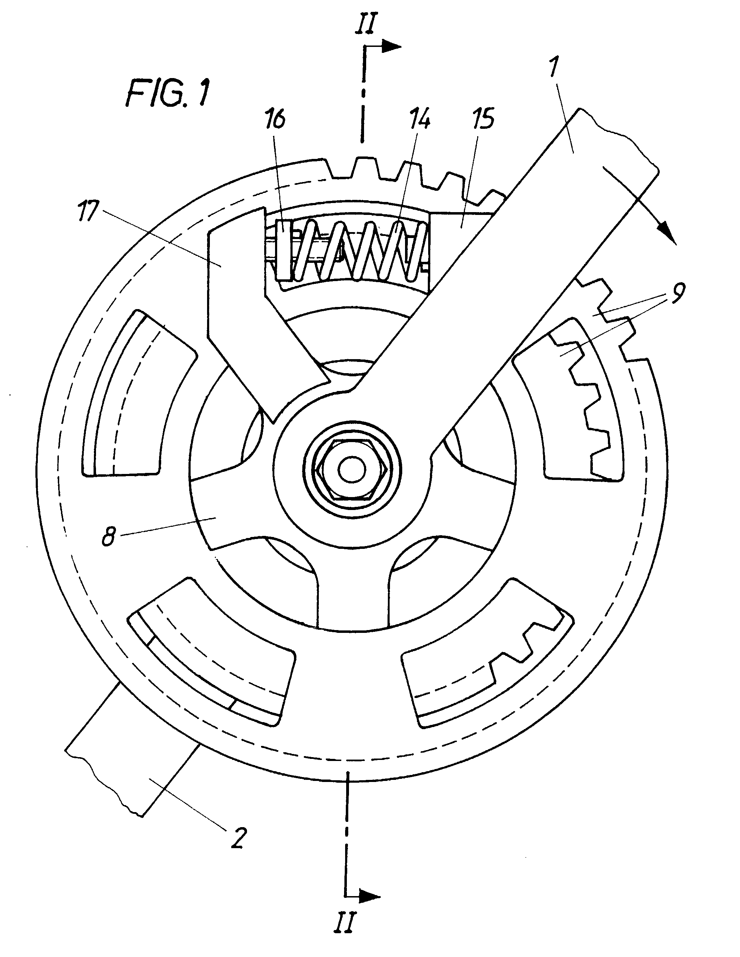

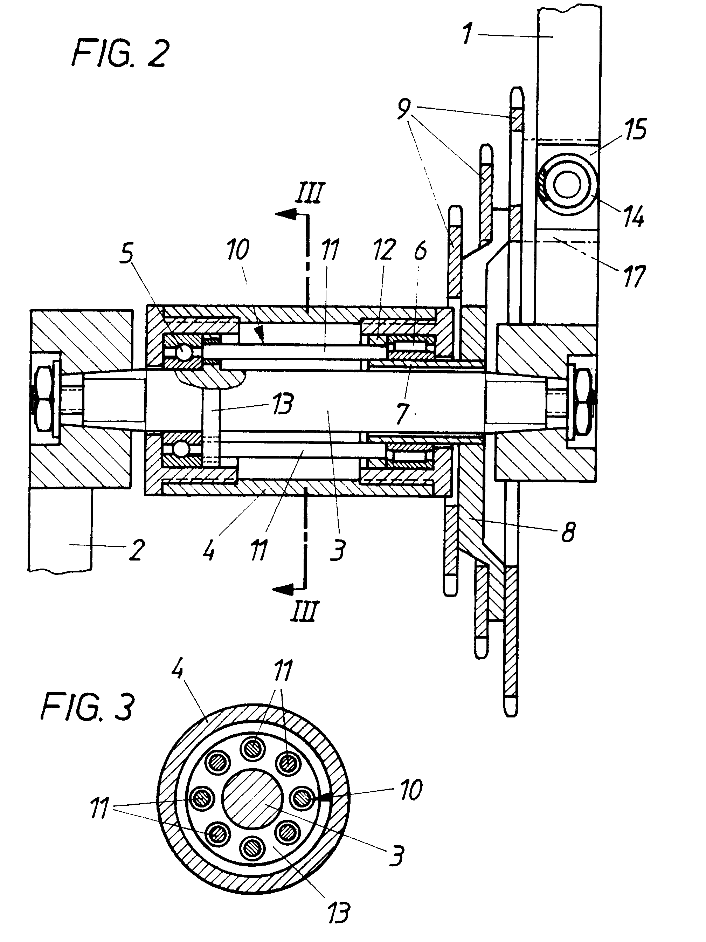

Der Tretkurbelantrieb gemäß dem Ausführungsbeispiel nach den Fig. 1 bis 3 besteht im wesentlichen aus zwei Tretkurbeln 1 und 2, die miteinander über eine Welle 3 drehfest verbunden sind. Diese Welle 3 ist in einem Lagergehäuse 4 gelagert, das in üblicher Weise in einen Fahrradrahmen eingesetzt werden kann. Das Lagergehäuse 4 nimmt nicht nur ein Wälzlager 5 für die Welle 3 im Bereich der einen Stirnseite, sondern auch ein Wälzlager 6 für die Nabe 7 eines Kettenrades 8 auf der gegenüberliegenden Stirnseite auf, wie dies der Fig. 2 entnommen werden kann. Auf dieses Kettenrad 8 sind mehrere Zahnradkränze 9 auswechselbar angeflanscht. Da die Welle 3 die in das Lagergehäuse 4 ragende Nabe 7 des Kettenrades 8 mit einem Lagerspiel durchsetzt, kann das Kettenrad 8 gegenüber der Welle 3 bzw. den Tretkurbeln 1 und 2 verdreht werden. Diese Verdrehung ist jedoch nur über eine im Lagergehäuse 4 vorgesehene Kraftübertragungsfeder 10 möglich, die aus mehreren über den Umfang der Welle 3 verteilten Federelementen 11 zusammengesetzt ist. Die Federelemente 11 bestehen gemäß den Fig. 2 und 3 aus die Welle 3 konzentrisch umschließenden Federstäben, die einerseits in Aufnahmebohrungen eines Endflansches 12 der Kettenradnabe 7 und anderseits in einen ringförmigen Ansatz 13 der Welle 3 eingesetzt sind. Die Kraftübertragung von den Tretkurbeln 1 und 2 auf das Kettenrad 8 erfolgt somit über die Kraftübertragungsfeder 10, deren Federstäbe beim Abwärtstreten der Tretkurbeln 1 und 2 unter einer Biege- und Torrsionsbelastung vorgespannt werden, um im Bereich des Totpunktes der Tretkurbeln 1 und 2 die beim Abwärtstreten gespeicherte Federenergie an das Kettenrad 8 mit der Wirkung abzugeben, daß eine über eine Kettenradumdrehung gleichmäßigere Drehmomentverteilung erzielt werden kann.

Da das Stützmoment, das vom Radfahrer im Totpunktbereich des Tretkurbelantriebes aufgebracht werden muß, um ein Rückdrehen der Welle 3 während der Entspannung der Kraftübertragungsfeder 10 zu verhindern, beschränkt bleiben muß, ist zwischen der Tretkurbel 1 und dem Kettenrad 8 eine zusätzliche Dämpfungsfeder 14 vorgesehen, die sich gemäß der Fig. 1 einerseits an einem Anschlag 15 der Tretkurbel 1 und anderseits an einem einstellbaren Anschlag 16 abstützt, der in einem am Kettenrad 8 festgeschraubten Lagerblock 17 schraubverstellbar gehalten ist. Die Entspannung der Kraftübertragungsfeder 10 wird somit durch die im Sinne der Vorspannung der Kraftübertragungsfeder 10 vorgespannte Dämpfungsfeder 14 gedämpft, so daß durch diese Dämpfung für die Aufnahme der Antriebskräfte eine ausreichend starke Kraftübertragungsfeder 10 eingesetzt werden kann, ohne eine Beeinträchtigung des gleichmäßigen Drehantriebes befürchten zu müssen.

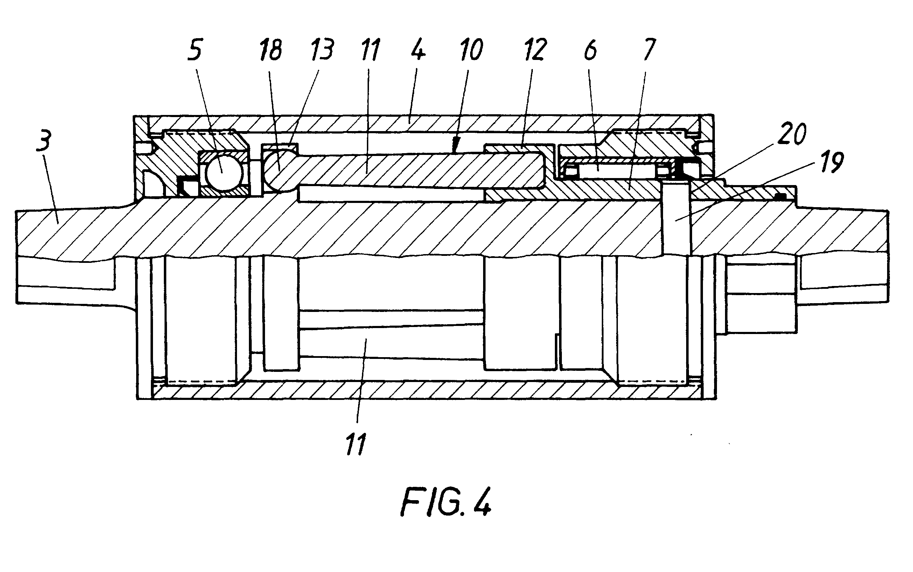

Soll eine Torsionsbeanspruchung der Federstäbe vermieden werden, so können die Federstäbe gemäß der Fig. 4 als einseitig eingespannte Biegestäbe ausgebildet werden, die im Endflansch 12 der Nabe 7 biegesteif eingespannt sind, im Bereich des gegenüberliegenden Endes aber mit Hilfe eines Kugelkopfes 18 frei beweglich im ringförmigen Ansatz 13 der Welle 3 gehalten werden, so daß von den Federstäben lediglich Biegemomente übertragen werden können. Um eine zusätzliche Überlastsicherung für die Federelemente 11 der Kraftübertragungsfeder 10 zu erhalten, ist der gegenseitige Drehwinkel zwischen der Welle 3 und der Nabe 7 durch Anschläge begrenzt. Diese Anschläge werden gemäß der Fig. 4 durch einen radialen Anschlagstift 19 der Welle 3 und ein in Umfangsrichtung verlaufendes Langloch 20 in der Nabe 7 gebildet, in das der Anschlagstift 19 eingreift. Die Nabe 7 kann daher gegenüber der Welle 3 nur solange verdreht werden, bis der Anschlagstift 19 an eines der beiden Enden des Langloches 20 anschlägt.

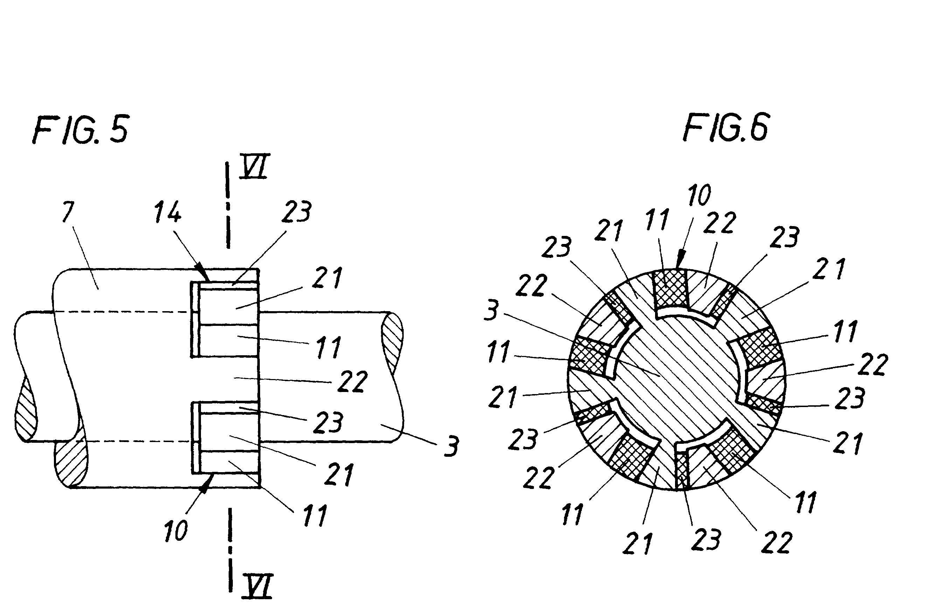

Die Kraftübertragungsfeder 10 muß jedoch nicht aus Biegestäben zusammengesetzt werden, sondern kann auch aus anderen Federelementen 11 aufgebaut sein. In den Fig. 5 und 6 ist ein Ausführungsbeispiel dargestellt, gemäß dem die Federelemente 11 aus Elastomerblöcken bestehen, die zwischen gegenseitig auf Lücke versetzten, zahnartigen Ansätzen 21 und 22 einerseits der Welle 3 und anderseits der Nabe 7 eingesetzt sind. Auch in diesem Fall wird die Belastung der Kraftübertragungsfeder 10 auf einzelne voneinander getrennte Federelemente 11 aufgeteilt. Diese Konstruktion eignet sich auch dazu, die Dämpfungsfeder 14 aus einzelnen Federelementen 23 zusammenzusetzen, die wieder zwischen den zahnartigen Ansätzen 21 und 22 der Welle 3 bzw. der Nabe 7 angeordnet werden, wie dies insbesondere der Fig. 6 entnommen werden kann. Es braucht wohl nicht näher ausgeführt zu werden, daß die Elastomerblöcke auch durch Federelemente 11 in Form von Tellerfedern oder Blattfederbügeln ersetzt werden können.

Die Erfindung ist selbstverständlich nicht auf die dargestellten Ausführungsbeispiele beschränkt. So muß die Kraftübertragungsfeder 10 nicht im Bereich der Tretkurbelwelle vorgesehen werden. Sie könnte auch im Bereich des Lagergehäuses für die Welle des Hinterrades zwischen der Hinterradwelle und dem Kettenrad zum Antrieb der Hinterradwelle vorgesehen sein. Die grundsätzliche Konstruktion der Federanordnung kann auch in diesem Falle beibehalten werden. Außerdem könnten die Federstäbe der Kraftübertragungsfeder mit endseitigen Lagerringen vorzugsweise einstückig verbunden werden, wobei die Lagerringe einerseits an der Nabe des Kettenrades und anderseits an der Welle abzustützen sind.

## Patentansprüche

1. Tretkurbelantrieb für ein Fahrrad mit einer ein Lagergehäuse (4) durchsetzenden Welle (3), einem wenigstens einen Zahnkranz (9) aufweisenden Kettenrad (8), dessen Nabe (7) gegenüber der Welle (3) drehbar gehalten ist, und mit einer einerseits an der Welle (3) und anderseits an der Nabe (7) des Kettenrades (8) abgestützten, innerhalb des Lagergehäuses (4) angeordneten Kraftübertragungsfeder (10), dadurch gekennzeichnet, daß die Kraftübertragungsfeder (10) aus über den Umfang der Welle (3) verteilten, jeweils an der Nabe (7) des Kettenrades (8) und an der Welle (3) abgestützten Federelementen (11) besteht.

2. Tretkurbelantrieb nach Anspruch 1, dadurch gekennzeichnet, daß die Federelemente (11) der Kraftübertragungsfeder (10) aus in Richtung der Welle verlaufenden Federstäben bestehen.

3. Tretkurbelantrieb nach Anspruch 2, dadurch gekennzeichnet, daß die Federstäbe mit endseitigen Lagerringen verbunden sind.

4. Tretkurbelantrieb nach Anspruch 2, dadurch gekennzeichnet, daß die Federstäbe als einseitig eingespannte Biegestäbe ausgebildet sind, deren dem Einspannende gegenüberliegendes Ende gelenkig gehalten ist.

5. Tretkurbelantrieb nach Anspruch 1, dadurch gekennzeichnet, daß die Welle (3) gegen die Nabe (7) des Kettenrades (8) vorragende, über den Umfang verteilte, zahnartige Ansätze (21) aufweist, die in Lücken zwischen zahnartigen Ansätzen (22) der Nabe (7) eingreifen, und daß zwischen den zahnartig ineinandergreifenden Ansätzen (21, 22) der Welle (3) und der Nabe (7) die Federelemte (11) angeordnet sind.

6. Tretkurbelantrieb nach einem der Ansprüche 1 bis 5, dadurch gekennzeichnet, daß der gegenseitige Drehwinkel zwischen der Welle (3) und der Nabe (7) des Kettenrades (8) durch Anschläge (19, 20) begrenzt ist.

7. Tretkurbelantrieb nach einem der Ansprüche 1 bis 6, dadurch gekennzeichnet, daß die Nabe (7) des Kettenrades (8) im Lagergehäuse (4) für die Welle (3) drehbar gelagert ist.

8. Tretkurbelantrieb nach einem der Ansprüche 1 bis 7, dadurch gekennzeichnet, daß zwischen der Nabe (7) des Kettenrades (8) und der Welle (3) eine im Belastungssinn der Kraftübertragungsfeder (10) vorgespannte Dämpfungsfeder (14) wirksam ist.

9. Tretkurbelantrieb nach Anspruch 8, dadurch gekennzeichnet, daß neben der Kraftübertragungsfeder (10) auch die Dämpfungsfeder (14) im Lagergehäuse (4) der Welle (3) untergebracht ist.

## Claims

1. A pedal drive for a bicycle comprising a shaft (3) extending through a bearing casing (4), a chain wheel (8) having at least one toothed rim (9) and a hub (7) held rotatably relative to the shaft (3), and a power-transmitting spring (10) disposed inside the bearing casing (4) and abutting the shaft (3) at one end and the hub (7) of the chain wheel (8) at the other end, characterised in that the power-transmitting spring (10) is made up of spring elements (11) distributed around the periphery of the shaft (3) and each abutting the shaft (3) and the hub (7) of the chain wheel (8).

2. A pedal drive according to claim 1, characterised in that the elements (11) of the power-transmitting spring (10) comprise spring rods extending in the direction of the shaft.

3. A pedal drive according to claim 2, characterised in that the spring rods are connected to bearing rings at the ends.

4. A pedal drive according to claim 2, characterised in that the spring rods are in the form of bending rods clamped at one end whereas the end remote from the clamped end is pivotably held.

5. A pedal drive according to claim 1, characterised in that the shaft (3) has peripherally distributed toothed extensions (21) projecting towards the hub (7) of the chain wheel (8) and engaging in gaps between toothed extensions (22) on the hub (7), and in that the spring elements (11) are disposed between the toothed interlocking extensions (21, 22) of the shaft (3) and of the hub (7).

6. A pedal drive according to any of claims 1 to 5, characterised in that the angle of rotation between the shaft (3) and the hub (7) of the chain wheel (8) is bounded by stops (19, 20).

7. A pedal drive according to any of claims 1 to 6, characterised in that the hub (7) of the chain wheel (8) is mounted for rotation in the bearing casing (4) for the shaft (3).

8. A pedal drive according to any of claims 1 to 7, characterised in that a damping spring (14) prestressed in the loading direction of the power-transmitting spring (10) is operative between the shaft (3) and the hub (7) of the chain wheel (8).

9. A pedal drive according to claim 8, characterised in that in addition to the power-transmitting spring (10), the damping spring (14) is also disposed in the bearing casing (4) of the shaft (3).

## Revendications

1. Entraînement de manivelle de pédalier pour une bicyclette, avec un arbre (3), traversant un carter de palier (4), une roue à chaîne (8), présentant au moins une couronne dentée (9), roue à chaîne dont le moyeu est maintenu à rotation par rapport à l'arbre (3), et avec un ressort de transmission de force (10) soutenu, d'une part, sur l'arbre (3) et, d'autre part, sur le moyeu (7) de la roue à chaîne (8), ressort disposé à l'intérieur du carter de palier (4), caractérisé par le fait que le ressort de transmission de force (10) est constitué d'éléments élastiques (11), répartis sur la périphérie de l'arbre (3), soutenus respectivement sur le moyeu (7) de la roue à chaîne (8) et sur l'arbre (3).

2. Entraînement de manivelle de pédalier selon la revendication 1, caractérisé par le fait que les éléments élastiques (11) du ressort de transmission de force (10) sont constitués de barres élastiques, s'étendant dans la direction de l'arbre.

3. Entraînement de manivelle de pédalier selon la revendication 2, caractérisé par le fait que les barres élastiques sont reliées à des bagues de palier, situées côté extrémité.

4. Entraînement de manivelle de pédalier selon la revendication 2, caractérisé par le fait que les barres élastiques sont réalisées sous la forme de barres flexibles enserrées à une extrémité, dont l'extrémité opposée à l'extrémité enserrée est maintenue de façon articulée.

5. Entraînement de manivelle de pédalier selon la revendication 1, caractérisé par le fait que l'arbre (3) présente des appendices (21) du genre de dents, répartis sur la périphérie, faisant saillie vers le moyeu (7) de la roue à chaîne (8), appendices s'engageant dans des cavités, ménagées entre des appendices (22) du genre de dents, appartenant au moyeu (7), et par le fait que les éléments élastiques (11) sont disposés entre les appendices (21, 22), s'engageant les uns dans les autres à la façon de dents, de l'arbre (3) et du moyeu (7).

6. Entraînement de manivelle de pédalier selon l'une des revendications 1 à 5, caractérisé par le fait que l'angle de rotation mutuel, entre l'arbre (3) et le moyeu (7) de la roue à chaîne (8), est limité au moyen de butées (19, 20).

7. Entraînement de manivelle de pédalier selon l'une des revendications 1 1 à 6, caractérisé par le fait que le moyeu (7) de la roue à chaîne (8) est monté de façon à pouvoir tourner dans le carter de palier (4) prévu pour l'arbre (3).

8. Entraînement de manivelle de pédalier selon l'une des revendications 1 à 7, caractérisé par le fait qu'un ressort d'amortissement (14), précontraint dans le sens du chargement du ressort de transmission de force (10), est mis en action entre le moyeu (7) de la roue à chaîne (8) et l'arbre (3).

9. Entraînement de manivelle de pédalier selon la revendication 8, caractérisé par le fait que, outre le ressort de transmission de force (10), le ressort d'amortissement (14) est également logé dans le carter de palier (4) de l'arbre (3).
